# FASCICULE DE BREVET EUROPEEN

(11) **EP 2 200 051 B1**
(45) Date de publication et mention de la délivrance du brevet: **27.09.2017**
(21) Numéro de dépôt: 09305990.5
(22) Date de dépôt: 19.10.2009
(51) Int. Cl.: H01F 10/32, H01F 41/32

(54) **Dispositif radiofréquence comportant un film mince à permittivité et perméabilité élevées**
Radiofrequenz-Vorrichtung enthaltend eine dünne Schicht mit hoher Permittivität und Permeabilität
Radiofrequency device comprising a thin film with high permittivity and permeability

(30) Priorité: 11.12.2008 FR 0858470
(43) Date de publication de la demande: 23.06.2010
(73) Titulaire: Commissariat à l'Énergie Atomique et aux Énergies Alternatives, 75015 Paris (FR); Centre National de la Recherche Scientifique, 75016 Paris (FR)
(72) Inventeur: Viala, Bernard, 38360 SASSENAGE (FR); Benevent, Evangeline, 38000 GRENOBLE (FR); Dubarry, M. Christophe, 38640, CLAIX (FR); Garello, M. Kévin, 29280, LOCMARIA-PLOUZANE (FR)
(74) Mandataire: Cabinet Laurent & Charras

(56) Documents cités:
- US-A- 5 728 481
- US-A1- 2006 256 480
- YING HAO CHU ET AL: "Electric-field control of local ferromagnetism using a magnetoelectric multiferroic" NATURE MATERIALS NATURE PUBLISHING GROUP UK, vol. 7, no. 6, juin 2008 (2008-06), pages 478-482, XP002558872 ISSN: 1476-1122
- MICHEL ET AL: "New RF Magnetic Stripe Inductors With Flanges Based on Exchange-Coupled Magnetic Films" IEEE TRANSACTIONS ON MAGNETICS, IEEE SERVICE CENTER, NEW YORK, NY, US, vol. 42, no. 10, 1 octobre 2006 (2006-10-01), pages 3368-3370, XP011149225 ISSN: 0018-9464
- GARELLO K ET AL: "Magnetodielectric thin film heterostructure with high permeability and permittivity" IEEE TRANSACTIONS ON MAGNETICS IEEE USA, vol. 45, no. 10, octobre 2009 (2009-10), pages 4325-4328, XP002558873 ISSN: 0018-9464
- TATARENKO A S ET AL: "Miniature antenna based on magnetoelectric composites" ELECTRONICS LETTERS, IEE STEVENAGE, GB, vol. 44, no. 8, 10 avril 2008 (2008-04-10) , pages 506-508, XP006030917 ISSN: 0013-5194

## Description

### DOMAINE DE L'INVENTION

L'invention a trait au domaine général des émetteurs/récepteurs radiofréquences, mais également au domaine de traitement de l'information mettant en oeuvre la technologie des systèmes magnétiques et diélectriques à couches minces. Plus spécifiquement, le domaine de fréquences visé est compris entre la centaine de Megahertz et plusieurs dizaines de Gigahertz.

L'invention a plus spécifiquement trait aux films minces, notamment aux films minces entrant dans la constitution des circuits hyperfréquences, mis en oeuvre dans de tels émetteurs/récepteurs radiofréquences.

### ETAT DE LA TECHNIQUE

Les circuits hyperfréquences trouvent usuellement application dans le domaine de la télécommunication, où ils entrent dans la constitution des chaînes d'émission/réception, qui comprennent notamment des antennes et des circuits analogiques radio fréquences pour le traitement du signal (filtres, adaptation d'impédance, amplification).

Il est ainsi recherché pour ces circuits une compacité, une efficacité et une intégration élevées, notamment pour les éléments rayonnants rentrant dans la conception des antennes et des éléments résonnants utiles pour les filtres et l'adaptation d'impédance. Afin de satisfaire de telles exigences, il convient de concevoir des substrats ayant la particularité de posséder des valeurs de permittivité et de perméabilité élevées dans les fréquences microondes, c'est-à-dire les fréquences comprises entre 1 à 20 gigahertz. En effet, de tels matériaux permettent de satisfaire aux besoins de circuits de compacité et donc d'intégration élevées, et de substrats fonctionnalisés, par exemple en termes de bande interdite, de propriétés « main gauche » et d'agilité en fréquence.

Plusieurs voies concernant les matériaux entrant dans la constitution des substrats des circuits hyperfréquences ont ainsi été explorées, comme par exemple l'utilisation de matériaux diélectriques dits « high K » ou encore l'adaptation de techniques de piézoélectricité basses fréquences au domaine microonde.

Cependant, on ne connaît pas aujourd'hui de matériau possédant à la fois une permittivité et une perméabilité élevées dans le domaine des fréquences microondes.
Les ferrites ont certes fait l'objet d'une intense recherche dans ce but, mais le produit de leur perméabilité par leur permittivité atteint difficilement une valeur de cent dans les fréquences microondes, ce qui s'avère insuffisant.
Une solution pour obtenir les propriétés recherchées consiste donc à combiner des matériaux diélectriques de forte permittivité avec des matériaux ferromagnétiques de forte perméabilité dans la bande de fréquences d'intérêt. Cette combinaison n'a pas pour l'heure été rendue possible car l'élaboration d'un matériau diélectrique à haute permittivité, comme un oxyde stoechiométrique, tel que le HfO₂, le Ta₂O₅, le BaTiO₃ ou encore le SrTiO₃ par exemple, nécessite l'utilisation de procédé impliquant des températures (dépôt ou recuit) importantes, et typiquement supérieures à 500 °C, alors que les matériaux ferromagnétiques (comme NiFe, CoZrNb, FeHfN, FeCoB ...) ne supportent pas de telles températures, ou alors, voient leurs propriétés magnétiques drastiquement diminuées. Il existe donc aujourd'hui une incompatibilité technique empêchant la fabrication d'un matériau composite de haute permittivité et de haute perméabilité.

### EXPOSE DE L'INVENTION

Le but de la présente invention est de résoudre le problème susmentionné en proposant des éléments magnéto-diélectriques qui comportent un film mince présentant à la fois une permittivité et une perméabilité élevées, c'est-à-dire chacune supérieure à dix.

A cet effet l'invention a pour objet dispositif radiofréquence selon la revendication 1. Par film mince, ou couche mince, on entend ici une couche dont l'épaisseur est inférieure à 10 µm.

La combinaison particulière résultant de l'empilement visé par l'invention constitue une rupture définitive par rapport aux matériaux magnéto-diélectriques (grenats, ferrites ...) connus de l'art antérieur. En effet, de tels matériaux présentent une limitation dès quelques centaines de Megahertz (sans recours à une technique de polarisation extérieure), alors même que l'empilement caractéristique de l'invention permet un fonctionnement pour des fréquences supérieures à quelques dizaines de Gigahertz (sans recours à une technique de polarisation extérieure).
L'invention s'en démarque donc en proposant un film composite magnéto diélectrique en couches minces, permettant de combiner perméabilité et permittivité élevées dans le domaine des microondes.
Avantageusement, la perméabilité du matériau magnétique est supérieure à 100 à 1 GHz. En outre, la permittivité du matériau diélectrique est avantageusement supérieure à 100 à 1GHz.
Selon l'invention, le matériau magnétique et le matériau diélectrique sont agencés sous forme de couches minces.

Selon une caractéristique avantageuse de l'invention, le matériau magnétique est un matériau ferromagnétique, dont l'aimantation est supérieure à 1 T, et avantageusement supérieure à 2 T. Avantageusement, il est couplé par couplage d'échange à un matériau antiferromagnétique.
Le couplage d'échange intervenant entre la couche en matériau ferromagnétique et la couche en matériau antiferromagnétique intervient à l'interface entre ces deux couches, et permet d'assurer une énergie d'anisotropie suffisamment élevée (polarisation magnétique) pour étendre le comportement dynamique (perméabilité) des couches en matériau ferromagnétique à très haute fréquence, et en l'espèce, dans le domaine d'intérêt.
Ainsi, et grâce à cette anisotropie, il est possible d'obtenir une perméabilité élevée à des très hautes fréquences, typiquement jusqu'à 20 Gigahertz sans recours à des moyens de polarisations magnétiques extérieures comme un électroaimant par exemple qui n'est pas compatible avec le domaine d'intérêt.

En outre, en raison de ce couplage, le matériau ferromagnétique présente un état rémanent saturé (exempt de domaine magnétique). Les propriétés magnétiques douces d'un matériau ferromagnétique sont réalisées à condition que les grains soient de petite taille et fortement jointifs. Cela permet d'annuler ou de diminuer significativement la constante d'anisotropie magnétocristalline présente dans chaque grain et qui tend à réduire la mobilité des parois magnétiques et donc pénaliser le caractère doux recherché. Or, un chauffage excessif d'un matériau ferromagnétique seul provoque une croissance des grains et/ou une oxydation des joints de grain qui tend à découpler ceux-ci, ce qui dégrade les propriétés magnétiques douces du matériau ferromagnétique. L'état rémanent saturé du matériau ferromagnétique obtenu par son couplage avec le matériau antiferromagnétique a pour effet que les propriétés magnétiques de cette combinaison dépendent moins de la taille des grains formant le matériau ferromagnétique. Il est ainsi possible de porter cette combinaison à une température supérieure à 300°C sans que la perméabilité en pâtisse.
Selon l'invention, le matériau ferromagnétique est choisi dans le groupe comprenant les alliages de Fe et de Co et de Ni, et toute composition associant deux ou les trois de ces éléments et éventuellement dopés en Bore et en Azote (NiFe, CoNiFe, CoFe, CoFeB, FeN, CoFeN + éventuellement X avec X = Al, Si, Ta, Hf, Zr ...)

Corollairement, le matériau antiferromagnétique est un alliage à base de manganèse, et notamment à base d'IrMn, PtMn ou de NiMn ou un oxyde de Fe ou de Co.

Le matériau diélectrique est quant à lui choisi dans le groupe des pérovskites (paraélectriques ou ferroélectriques), et plus particulièrement les titanates de baryum et de strontium.
Avantageusement, le matériau magnétique comprend au moins une couche de matériau ferromagnétique intercalée en couplage d'échange entre deux couches antiferromagnétiques et/ou une couche de matériau antiferromagnétique intercalée en couplage d'échange entre deux couches ferromagnétiques. Un tel agencement permet d'obtenir un état rémanent saturé du matériau ferromagnétique ainsi qu'une simplification du procédé de fabrication du matériau magnétique de part la possible utilisation d'une température de fabrication plus élevée.

L'invention vise également le procédé de réalisation d'un tel dispositif, selon la revendication 14. Selon ce procédé,
on dépose en alternance une couche en un matériau ferromagnétique (éventuellement couplée à une ou deux couches antiferromagnétiques) et une couche en un matériau diélectrique par pulvérisation par faisceau d'ions dans une enceinte sous vide.
L'empilement ainsi obtenu est compatible avec les étapes technologiques impliquant des températures allant jusque 400°C, permettant ainsi le dépôt du matériau diélectrique à de telles températures ou des recuits permettant de promouvoir le caractère cristallin de la couche de matériau diélectrique lorsque celle-ci est déposée sous forme amorphe à plus basse température, tout en préservant les propriétés magnétiques des couches en matériaux ferromagnétique et antiferromagnétique.
Selon ce procédé, le dépôt des couches en matériau ferromagnétique et antiferromagnétique est également réalisé par pulvérisation par faisceau d'ions.

### BREVE DESCRIPTION DES FIGURES

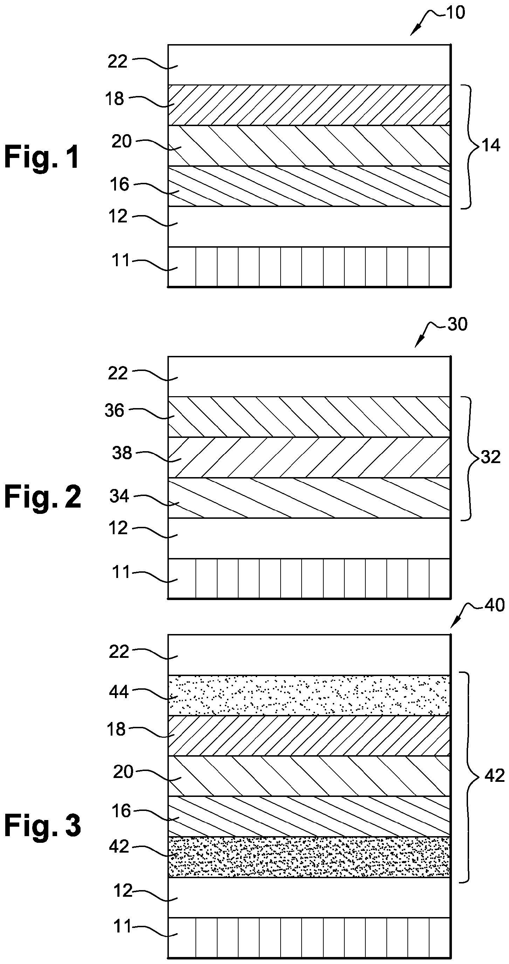

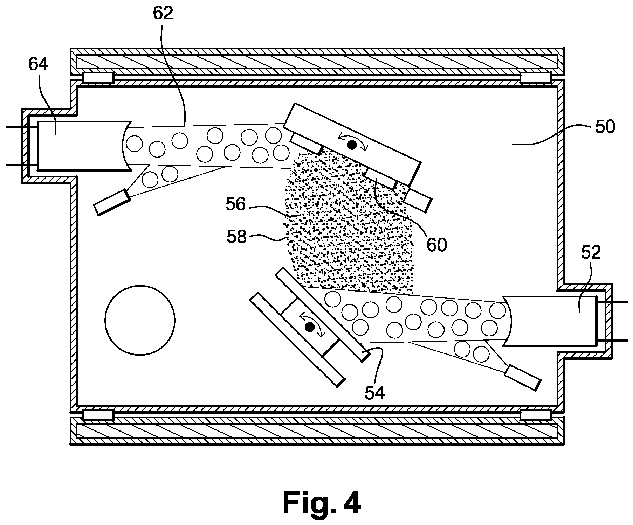

La description sera mieux comprise à la lecture de la description qui va suivre, données uniquement à titre d'exemple, et réalisée en relation avec les dessins annexés, dans lesquels des références identiques désignent des éléments identiques ou analogues, et dans lesquels :
▪ la figure 1 est une vue schématique en section d'un premier mode de réalisation de l'invention ;
▪ la figure 2 est une vue schématique en section d'un deuxième mode de réalisation de l'invention ;
▪ la figure 3 est une vue schématique en section d'un troisième mode de réalisation de l'invention ; et
▪ la figure 4 est une vue schématique d'une installation de pulvérisation par faisceau d'ions mise en oeuvre pour la fabrication d'un film mince selon les figures 1 à 3.

### DESCRIPTION DETAILLEE DE L'INVENTION

Sur la figure 1, un film mince **10** comporte :
▪ un substrat **11,** tel qu'un substrat de silicium, préférablement oxydé en surface (SiO₂);
▪ une première couche **12** d'épaisseur comprise entre 10 et 100 nm de matériau diélectrique à permittivité élevée, c'est-à-dire une permittivité supérieure à dix (à 1GHz) voire supérieure à 100 ;
▪ une alternance **14** de deux couches **16, 18** de matériau ferromagnétique à perméabilité microonde élevée (supérieure à 10 à 2GHz, voire supérieure à 100, avec une tangente de pertes inférieur à 0.1 sur toute la bande), ce qui correspond à un matériau ferromagnétique présentant une aimantation supérieure à 1T (voire supérieure à 2T), et d'une couche **20** de matériau antiferromagnétique. L'épaisseur des couches ferromagnétiques est de l'ordre de 10 à 100 nm, celle de la couche antiferromagnétique de l'ordre de 0.7 à 30 nm
▪ une deuxième couche **22** de matériau diélectrique à permittivité élevée déposée sur la dernière couche **18** de matériau ferromagnétique.

Le matériau diélectrique des couches **12** et **22** est avantageusement un oxyde de strontium (Sr) et de titane (Ti), notamment du titanate de strontium SrTiO₃, (matériau paraélectrique), dont la température de transition de phase amorphe / pérovskite, et donc la température de fabrication, est inférieure ou égale à 400°C.

Le matériau ferromagnétique constitutif des couches **16, 18** est quant à lui avantageusement un alliage à base de fer (Fe) et/ou de cobalt (Co) et/ou de nickel (Ni), notamment du FeCo ou du FeCoB, qui présente naturellement de très fortes aimantations à saturation, typiquement des aimantations voisines de 2 T.

Le matériau antiferromagnétique de la couche **20,** intercalée entre les couches **16, 18** de matériau ferromagnétique, est quant à lui avantageusement constitué d'un alliage à base de manganèse (Mn), notamment du NiMn.

Selon l'invention, le matériau ferromagnétique pourrait être utilisé seul (sans association avec un matériau antiferromagnétique). Cependant cette association est particulièrement intéressante car elle permet à l'empilement de supporter des températures élevées (de l'ordre de 400°C pour l'association FeCo/NiMn) tout en conservant de bonne propriété en termes de perméabilité.

Ainsi, en utilisant comme matériau diélectrique du SrTiO₃, pour le matériau ferromagnétique du FeCo et/ou du FeCoB et pour le matériau antiferromagnétique du NiMn, il est obtenu une compatibilité de température, la combinaison du matériau ferromagnétique avec le matériau antiferromagnétique supportant une température comprise entre 300°C et 400°C nécessaire à la formation de la phase pérovskite du matériau diélectrique.

En variante, d'autres matériaux peuvent être utilisés comme diélectrique 12, et par exemple un oxyde de baryum (Ba) et de titane, notamment du titanate de Baryum BaTiO₃, un oxyde de hafnium (Hf), notamment du HfO₂, ou de tantale (Ta), notamment du Ta₂O₅ (ferroélectrique). On préférera néanmoins les pérovskites comme BaTiO3 ou SrTiO3 par exemple, qui présentent une permittivité plus élevé (de l'ordre de 100 contre 10 pour les oxydes de Baryum ou d'hafnium).

D'autres matériaux sont également possibles pour la couche antiferromagnétique 20, comme un alliage PtMn ou IrMn et plus généralement tous les alliages à base de manganèse ou encore les oxyde de fer ou de cobalt ou de nickel.

Pour la couche ferromagnétique, on privilégiera CoFeB, FeN et CoFeN, mais d'autres matériaux sont possibles, notamment tous les alliages associant deux ou trois des éléments choisis parmi le fer, le cobalt et le nickel. Ces alliages pourront éventuellement être dopés, par exemple en bore ou en azote. Ils pourront également être associés à d'autres éléments comme Al, Si, Ta, Hf, Zr...

Les différentes combinaisons de matériaux para/ferroélectrique, ferromagnétique et antiferromagnétique décrites ci-dessus permettent d'obtenir des films minces ayant un produit permittivité par perméabilité supérieur à 100, voire supérieur à 1000, avec des tangentes de pertes respectives faibles, typiquement inférieure à 0.1 voire 0,01, et cela pour des fréquences allant jusqu'à la vingtaine de gigahertz.

Par ailleurs, le choix des matériaux ainsi que l'épaisseur des différentes couches donnent libre choix au concepteur d'équilibrer les valeurs de la permittivité et de la perméabilité afin de choisir l'impédance du film mince. Avantageusement, lorsqu'on ne souhaite pas de désadaptation d'impédance avec l'air, les valeurs de la permittivité et de la perméabilité du film mince seront choisies de manière à obtenir une impédance proche de celle de l'air pour le film mince. Pour d'autres applications en revanche, on pourra choisir d'autres valeurs : pour les antennes par exemple, on préconise en général un rapport mu/epsilon > 1 pour ne pas dégrader la bande passante.

Sur la figure 1, il a été illustré une alternance **14** de deux couches de matériau ferromagnétique **16, 18** avec une couche de matériau antiferromagnétique **20.**

Sur la figure 2, il est illustré un film mince **30** présentant une alternance **32** de deux couches de matériau antiferromagnétique **34, 36** avec une couche de matériau ferromagnétique **38.**

Toutefois, le mode de réalisation de la figure 1 est préféré car la couche de matériau antiferromagnétique est plus éloignée de la couche de matériau diélectrique que dans le mode de réalisation de la figure 2. En effet, lors de la fabrication du film mince, la couche de matériau antiferromagnétique au contact de la couche de matériau diélectrique peut être dégradée par la migration d'oxygène à l'interface, en particulier lorsque le matériau antiferromagnétique contient du manganèse.

Sur la figure 3, il est illustré un mode de réalisation analogue à ceux des figures 1 et 2, à la différence que la combinaison des couches ferromagnétiques et antiferromagnétiques est séparée des couches diélectriques par des couches intermédiaires.

Par exemple, partant du mode de réalisation de la figure 1, une couche intermédiaire **42** est intercalée entre la couche diélectrique **12** et la couche ferromagnétique **16,** et une couche intermédiaire **44** est intercalée entre la couche ferromagnétique **18** et la couche diélectrique **22.** Les couches intermédiaires **42, 44** jouent le rôle de couche de croissance ou de couche de protection (barrière de diffusion notamment) et sont avantageusement constituées de ruthénium (Ru) ou de tantale (Ta) ou de platine (Pt). Le ruthénium permet cependant une croissance cristalline favorable et constitue une bonne barrière d'interdiffusion.

Bien qu'une seule alternance de couches ferromagnétique et antiferromagnétique (ferromagnétique/antiferromagnétique/ferromagnétique ou antiferromagnétique/ ferromagnétique/antiferromagnétique) ait été décrite, l'empilement de plusieurs alternances est possible en fonction de l'application visée. Augmenter l'épaisseur utile permet par exemple d'améliorer l'efficacité de l'interaction entre les ondes et le milieu dans le cas d'une antenne. L'augmentation de matière permet d'augmenter le signal.

Il est possible également qu'en lieu et place de l'empilement magnétique compris entre deux couches diélectriques, on mette en oeuvre un empilement dans lequel la couche diélectrique est intercalée entre deux empilements magnétiques (matériau ferromagnétique seul, ou en association avec un matériau antiferromagnétique, avec éventuellement des couches intermédiaires comme dans les exemples précédemment décrits...)

La figure 4 illustre schématiquement un dispositif de pulvérisation par faisceau d'ions, qui est avantageusement mis en oeuvre pour la réalisation des films minces décrits en relation avec les figures 1 à 3.

La pulvérisation par faisceau d'ions est un technique de dépôt physique en phase vapeur selon laquelle, dans une enceinte placée sous vide **50,** des ions sont produits par une source **52** et sont accélérés vers le matériau à pulvériser **54.** Selon cette technique, la source d'ions **52** génère un faisceau d'ions monoénergétiques positifs (d'énergie typiquement comprise entre 500 et 1500 eV), le faisceau étant défini spatialement. Le faisceau d'ions, usuellement des ions Ar⁺, bombarde une cible **54** constituée du matériau que l'on souhaite déposer. Les particules **56** ainsi pulvérisées par le faisceau d'ions sont émises dans le demi-espace **58** face à la cible et viennent se condenser sur une surface chauffée ou non **60** pour former une couche du matériau constitutif de la cible.

Une source annexe **64** ou dite d'assistance permet d'améliorer l'uniformité de dépôt en augmentant la mobilité des espèces à la surface par un bombardement secondaire de faible énergie. Elle permet aussi l'adjonction d'oxygène par exemple pour densifier ou mieux contrôler la stoechiométrie de certains oxydes.
La pulvérisation par faisceau d'ions est particulièrement avantageuse pour le dépôt de la couche de matériau diélectrique à composition stoechiométrique directement à partir de la cible de même composition. On peut en plus bénéficier d'une injection de gaz d'oxygène soit dans le canon de dépôt soit dans celui d'assistance, ce qui permet d'augmenter la compacité des couches déposées, mais également de contrôler la stoechiométrie des couches de matériaux diélectriques, caractéristique importante pour les pérovskites, tels que le SrTiO₃ ou le BaTiO₃.
La pulvérisation par faisceau d'ions est également avantageuse pour le dépôt de couche de matériau ferromagnétique sur une couche de matériau antiferromagnétique, et vice versa, dans la mesure où l'absence de plasma dans l'environnement de la couche en cours de dépôt permet une croissance avec peu de défauts, et garantit des qualités d'interface élevées, assurant ainsi un bon contrôle des propriétés des films qui mettent en jeu des empilements de plusieurs couches d'épaisseur nanométrique.

Par ailleurs, la pulvérisation par faisceau d'ions permet de déposer les pérovskites telles que le SrTiO3 ou le BaTiO3 avec une température de transition amorphe/pérovskite comprise entre 300°C et 400°C. Il est ainsi possible de réaliser l'intégralité de l'empilement des couches de diélectrique, antiferromagnétique et magnétique à l'aide de cette technique.

Le dépôt par IBS est particulièrement avantageux. Néanmoins d'autres techniques de réalisation peuvent être envisagées dans la mesure où les températures mises en oeuvre permettent de préserver les propriétés des différents matériaux mis en jeu. On pourrait par exemple déposer les couches ferromagnétiques, antiferromagnétiques, et les couches intermédiaires par dépôt en phase vapeur (PVD) (« *Physical Vapor Desposition* ») par exemple, puis déposer sur l'empilement le pérovskite STO par voie chimique, comme décrit dans l'article de M. Niederberger et al (« A general soft-chemistry route to perovskites and related materials : synthesis of BaTiO3, BaZrO3, and LiNbO3, nanoparticles » - Angew. Chem. Int. Ed. 2004, 43, 2270 - 2273), et poursuivre par des dépôts PVD. Les températures mises en oeuvre dans le procédé chimique de dépôt du STO sont de l'ordre de 200/300°C, donc compatibles avec les matériaux magnétiques qui sont dessous dans l'empilement.

Des techniques de report de couches pourraient également être envisagées pour la couche diélectrique, par exemple par implantation d'espèces gazeuses (d'hydrogène et/ou d'hélium par exemple) dans une couche diélectrique, collage direct de cette couche sur l'empilement magnétique souhaité et fracture au niveau de la zone implantée.

Les films minces composites magnéto diélectrique en couches minces décrits ci-dessus combinent ainsi des perméabilité et permittivité élevées et trouve ainsi particulièrement application dans le domaine des microondes, notamment dans la fabrication des circuits hyperfréquences. En effet, ces films minces peuvent entrer dans la constitution des éléments magnéto-diélectrique des dispositifs radiofréquence, notamment constituer un substrat pour de tels dispositifs, ou un revêtement pour un substrat, et/ou être utilisés dans la formation de composant passifs (éléments résonnants, filtres, coupleurs, inductances, baluns, lignes à retard, etc...) ou d'antennes radiofréquences (comprenant par exemple un revêtement formé d'un tel film, ou obtenue en formant un motif d'antenne dans un substrat comprenant un tel film).

## Revendications

1. Dispositif radiofréquence opérant entre 1 et 20 GHz, dont au moins un élément magnéto-diélectrique radiofréquence opérant entre 1 et 20 GHz comporte un film mince composite (10, 30, 40) comprenant un matériau magnétique (16, 18, 38) présentant une perméabilité supérieure à 10 à 1 GHz et un matériau diélectrique (12, *22),* ***caractérisé* en ce que** le matériau diélectrique (12, 22) est une pérovskite, obtenue par une pulvérisation par faisceau d'ions dans une enceinte sous vide, présentant une permittivité supérieure à 10 à 1 GHz, et **en ce que** le dispositif fait l'objet d'une opération de dépôt ou de recuit à une température au plus égale à 400 °C.

2. Dispositif radiofréquence selon la revendication 1, ***caractérisé* en ce que** la perméabilité du matériau magnétique (16, 18, 38) est supérieure à 100 à 1 GHz.

3. Dispositif radiofréquence selon l'une des revendications 1 et 2, ***caractérisé* en ce que** la permittivité du matériau diélectrique (12, 22) est supérieure à 100 à 1GHz.

4. Dispositif radiofréquence selon l'une des revendications 1 à 3, ***caractérisé* en ce que** le matériau magnétique (16, 18, 38) et le matériau diélectrique (12, 22) sont agencés sous forme de couches minces.

5. Dispositif radiofréquence selon la revendication 4, ***caractérisé* en ce que** les couches réalisées en matériau magnétique sont en contact avec les couches en matériau diélectrique.

6. Dispositif radiofréquence selon l'une des revendications 1 à 5, ***caractérisé* en ce que** le matériau magnétique est un matériau ferromagnétique dont l'aimantation est supérieure à 1 T, et avantageusement supérieure à 2 T.

7. Dispositif radiofréquence selon l'une des revendications 1 à 5, ***caractérisé* en ce que** les couches réalisées en matériau magnétique sont constituées de couches ferromagnétiques couplées par couplage d'échange avec des couches antiferromagnétiques (20, 34, 36).

8. Dispositif radiofréquence selon la revendication 7, ***caractérisé* en ce que** l'empilement des couches en matériau ferromagnétique et antiferromagnétique est séparé des couches en matériau diélectrique par au moins une couche intermédiaire (42, 44), faisant fonction de couche de croissance ou de couche de protection.

9. Dispositif radiofréquence selon l'une des revendications 6 à 8, ***caractérisé* en ce que** le matériau ferromagnétique est choisi dans le groupe comprenant les alliages de Fe et de Co et de Ni, et toute composition associant deux ou les trois de ces éléments, et éventuellement dopés en Bore et en Azote (NiFe, CoNiFe, CoFe, CoFeB, FeN, CoFeN + éventuellement X avec X = Al, Si, Ta, Hf, Zr ...)

10. Dispositif radiofréquence selon l'une des revendications 7 et 8, ***caractérisé* en ce que** le matériau antiferromagnétique est choisi dans le groupe comprenant les alliages à base de manganèse, et notamment à base d'IrMn, PtMn ou de NiMn ou un oxyde de Fe ou de Co.

11. Dispositif radiofréquence selon l'une des revendications 1 à 10, ***caractérisé* en ce que** le matériau diélectrique est un titanates de baryum ou de strontium.

12. Dispositif radiofréquence selon l'une des revendications 8 à 11, ***caractérisé* en ce que** la ou les couches intermédiaires sont réalisées en un matériau choisi dans le groupe comprenant le platine, le ruthénium et le tantale.

13. Dispositif radiofréquence selon l'une quelconque des revendications précédentes, ***caractérisé* en ce que** le matériau magnétique comprend au moins une couche de matériau ferromagnétique (38) intercalée en couplage d'échange entre deux couches antiferromagnétiques (34, 36) et/ou une couche de matériau antiferromagnétique (20) intercalée en couplage d'échange entre deux couches ferromagnétiques (16, 18).

14. Procédé pour la réalisation d'un dispositif radiofréquence conforme à l'une des revendications 1 à 13, ***caractérisé* en ce que** les couches en matériau diélectrique sont déposées par pulvérisation par faisceau d'ions dans une enceinte sous vide, et **en ce que** l'empilement constitutif du film fait l'objet d'une opération de dépôt ou de recuit du matériau diélectrique à une température au plus égale à 400 °C.

## Patentansprüche

1. Zwischen 1 und 20 GHz arbeitende Radiofrequenz-Vorrichtung, bei der mindestens ein di-elektromagnetisches Element, arbeitend mit einer Radiofrequenz zwischen 1 und 20 GHz, eine dünne Verbundschicht (10, 30, 40) enthält, die ein magnetisches Material (16, 18, 38) mit einer Permeabilität über 10 bis 1 GHz und ein dielektrisches Material (12, 22) umfasst, ***dadurch gekennzeichnet, dass*** es sich bei dem dielektrischen Material (12, 22) um ein Perowskit handelt, das durch Ionenstrahl-Zerstäubung in einem Vakuumbehälter, mit einer Permittivität von über 100 bis 1 GHz erhalten wird und ***dadurch, dass*** die Vorrichtung Gegenstand einer Ablagerungs- oder Temperoperation bei einer Temperatur von höchstens gleich 400 °C ist.

2. Radiofrequenz-Vorrichtung gemäß Anspruch 1, ***dadurch gekennzeichnet, dass*** die Permeabilität des magnetischen Materials (16, 18, 38) höher als 100 bis 1 GHz liegt.

3. Radiofrequenz-Vorrichtung gemäß Anspruch 1 oder 2, ***dadurch gekennzeichnet, dass*** die Permittivität des dielektrischen Materials (12, 22) höher als 100 bis 1 GHz liegt.

4. Radiofrequenz-Vorrichtung gemäß einem der Ansprüche 1 bis 3, ***dadurch gekennzeichnet, dass*** das magnetische Material (16, 18, 38) und das dielektrische Material (12, 22) in Form dünner Schichten angeordnet sind.

5. Radiofrequenz-Vorrichtung gemäß Anspruch 4, ***dadurch gekennzeichnet, dass*** die aus magnetischem Material hergestellten Schichten Kontakt mit den Schichten aus dielektrischem Material haben.

6. Radiofrequenz-Vorrichtung gemäß einem der Ansprüche 1 bis 5, ***dadurch gekennzeichnet, dass*** es sich bei dem magnetischen Material um ein ferromagnetisches Material handelt, dessen Magnetisierung über 1 T liegt, und besser noch über 2 T.

7. Radiofrequenz-Vorrichtung gemäß einem der Ansprüche 1 bis 5, ***dadurch gekennzeichnet, dass*** die Schichten aus magnetischem Material aus ferromagnetischen Schichten bestehen, die durch Austauschkopplung mit anti-ferromagnetischen Schichten (20, 34, 36) verkoppelt sind.

8. Radiofrequenz-Vorrichtung gemäß Anspruch 7, ***dadurch gekennzeichnet, dass*** das Stapel der Schichten aus ferromagnetischem und anti-ferromagnetischem Material von den Schichten aus dielektrischem Material durch mindestens eine Zwischenschicht (42, 44) getrennt sind, die als Wachstumsschicht oder Schutzschicht dient.

9. Radiofrequenz-Vorrichtung gemäß einem der Ansprüche 6 bis 8, ***dadurch gekennzeichnet, dass*** das ferromagnetische Material aus der Gruppe ausgewählt wird, die die Legierungen von Fe und von Co und von Ni, und alle Zusammensetzungen, die zwei oder drei dieser eventuell Bor- oder Stickstoffdotierten (NiFe, CoNiFe, CoFe, CoFeB, FeN, CoFeN + eventuell X mit X = Al, Si, Ta, Hf, Zr...) Elemente beinhalten, umfasst.

10. Radiofrequenz-Vorrichtung gemäß einem der Ansprüche 7 bis 8, ***dadurch gekennzeichnet, dass*** das anti-ferromagnetische Material aus der Gruppe ausgewählt wird, die die Legierungen auf Manganbasis, und insbesondere auf Basis von IrMn, PtMn oder NiMn oder ein Fe- oder Co- Oxid, umfasst.

11. Radiofrequenz-Vorrichtung gemäß einem der Ansprüche 1 bis 10, ***dadurch gekennzeichnet, dass*** das dielektrische Material ein Barium- oder Strontium-Titanat ist.

12. Radiofrequenz-Vorrichtung gemäß einem der Ansprüche 8 bis 11, ***dadurch gekennzeichnet, dass*** die Zwischenschicht oder Zwischenschichten aus einem Material besteht/bestehen, das aus der Gruppe ausgewählt wird, die Platin, Ruthenium und Tantal umfasst.

13. Radiofrequenz-Vorrichtung gemäß einem der vorhergehenden Ansprüche, **dadurch gekennzeichnet, dass** das magnetische Material mindestens eine Schicht ferromagnetischen Materials (38) umfasst, die in Austauschkopplung zwischen zwei anti-ferromagnetischen Schichten (34, 36) und/ oder einer Schicht anti-ferromagnetischen Materials (20) eingefügt wird, die eingefügt in Austauschkopplung zwischen zwei ferromagnetischen Schichten (16, 18) eingefügt wird.

14. Verfahren zur Herstellung einer Radiofrequenz-Vorrichtung gemäß einem der Ansprüche 1 bis 13, **dadurch gekennzeichnet, dass** die Schichten aus dielektrischem Material durch Ionenstrahl-Zerstäubung in einem Vakuumbehälter abgeschieden werden, und dass der Stapel, der die Schicht bildet, Gegenstand einer Ablagerungs- oder Temperoperation bei einer Temperatur von höchstens gleich 400 °C ist.

## Claims

1. Radio-frequency device operating between 1 and 20 GHz, whereof at least one magneto-dielectric radio-frequency element operating between 1 and 20 GHz comprises a composite thin film (10, 30, 40) comprising a magnetic material (16, 18, 38) offering permeability above 10 at 1 GHz and a dielectric material (12, 22), **characterized in that** the dielectric material (12, 22) is a perovskite obtained by ion beam sputtering in a vacuum enclosure, offering permittivity above 10 at 1GHz, and **in that** the device is subjected to an operation of depositing or annealing at a temperature at most equal to 400 °C.

2. Radio-frequency device as claimed in claim 1, ***wherein*** the permeability of the magnetic material (16, 18, 38) is above 100 at 1 GHz.

3. Radio-frequency device as claimed in one of claims 1 and 2, ***wherein*** the permittivity of the dielectric material (12, 22) is above 100 at 1GHz.

4. Radio-frequency device as claimed in one of claims 1 to 3, ***wherein*** the magnetic material (16, 18, 38) and the dielectric material (12, 22) are arranged in the form of thin layers.

5. Radio-frequency device as claimed in claim 4, ***wherein*** the layers made out of magnetic material are in contact with the layers of dielectric material.

6. Radio-frequency device as claimed in one of claims 1 to 5, ***wherein*** the magnetic material is a ferromagnetic material with the magnetization thereof being above 1 T, and to advantage above 2 T.

7. Radio-frequency device as claimed in one of claims 1 to 5, ***wherein*** the layers made out of magnetic material are constituted by ferromagnetic layers coupled via exchange coupling with antiferromagnetic layers (20, 34, 36).

8. Radio-frequency device as claimed in claim 7, ***wherein*** the stack of layers of ferromagnetic and antioferromagnetic material is separated from the layers of dielectric material by at least one intermediate layer (42, 44), acting as a growth layer or protection layer.

9. Radio-frequency device as claimed in one of claims 6 to 8, ***wherein*** the ferromagnetic material is selected from the group that includes alloys of Fe and Co and Ni, and any compound that associates two or all three of these elements, and possibly doped with Boron and Nitrogen (NiFe, CoNiFe, CoFe, CoFeB, FeN, CoFeN + possibly X with X = Al, Si, Ta, Hf, Zr etc.)

10. Radio-frequency device as claimed in one of claims 7 and 8, ***wherein*** the antiferromagnetic material is selected from the group that includes alloys based on manganese, and particularly based on IrMn, PtMn or NiMn or an oxide of Fe or Co.

11. Radio-frequency device as claimed in one of claims 1 to 10, ***wherein*** the dielectric material is a titanate of barium or of strontium.

12. Radio-frequency device as claimed in one of claims 8 to 11, ***wherein*** the intermediate layer or layers are made out of a material selected from the group that includes platinum, ruthenium and tantalum.

13. Radio-frequency device as claimed in any one of the previous claims, ***wherein*** the magnetic material includes at least one layer of ferromagnetic material (38) inserted in exchange coupling between two antiferromagnetic layers (34, 36) and/or a layer of antiferromagnetic material (20) inserted in exchange coupling between two ferromagnetic layers (16, 18).

14. Method for making a radio-frequency device as claimed in one of claims 1 to 13, ***wherein*** the layers of dielectric material are deposited by ion beam sputtering in a vacuum enclosure, and wherein the stack constituting the film is subjected to an operation of depositing or annealing the dielectric material at a temperature at the most equal to 400 °C.
